# EUROPÄISCHE PATENTSCHRIFT

(11) **EP 2 606 735 B1**
(45) Veröffentlichungstag und Bekanntmachung des Hinweises auf die Patenterteilung: **29.10.2014**
(21) Anmeldenummer: 11195551.4
(22) Anmeldetag: 23.12.2011
(51) Int. Cl.: A22C 21/00

(54) **Vorrichtung und Verfahren zum vollständigen Trennen bereits teilweise von der Karkasse eines entweideten Geflügelkörpers gelösten Brustfilets von der Karkasse**
Device and method for complete separation of a breast fillet partially separated from the carcass of a gutted poultry body
Dispositif et procédé de séparation complète voire partielle de la carcasse d'un filet séparés de la carcasse d'un corps de volaille éviscéré

(43) Veröffentlichungstag der Anmeldung: 26.06.2013
(73) Patentinhaber: Nordischer Maschinenbau Rud. Baader GmbH + Co. KG, 23560 Lübeck (DE)
(72) Erfinder: Evers, Reinhard, 23617 Stockelsdorf (DE); Landt, Andreas, 23554 Lübeck (DE)
(74) Vertreter: Stork Bamberger

(56) Entgegenhaltungen:
- EP-A1- 1 430 780
- EP-A2- 1 654 932
- EP-A2- 2 332 419
- US-A- 4 373 232
- US-A- 4 564 976

## Beschreibung

Die Erfindung betrifft eine Vorrichtung zum vollständigen Trennen bereits teilweise von der Karkasse eines entweideten Geflügelkörpers gelöster Brustfilets von der Karkasse, umfassend ein Paar Trennmittel zum Trennen der zu beiden Seiten des Brustbeins der Karkasse herabhängenden Brustfilets vom Brustbein sowie Führungsmittel zum Führen der Karkasse in Richtung der beiden beabstandet zueinander angeordneten Trennmittel, wobei das Führungsmittel zwei nebeneinander und beabstandet zueinander liegenden Führungselemente umfasst, die zwischen sich einen in Transportrichtung T der Geflügelkörper gerichteten Spalt zur Aufnahme und zum Führen des Brustbeins der Karkasse bilden und wobei die Trennmittel von unten in diesen Spalt derart eintauchen, dass die Trennmittel zum Trennen der Brustfilets vom Brustbein nach oben über das Führungsmittel hinaus in Richtung der Karkasse ragen.

Des Weiteren betrifft die Erfindung ein Verfahren zum vollständigen Trennen bereits teilweise von der Karkasse eines entweideten Geflügelkörpers gelöster Brustfilets von der Karkasse insbesondere mit einer Vorrichtung nach einem der Ansprüche 1 bis 17 mit den Schritten: Zuführen der Karkasse mit den bereits teilweise gelösten und vom Brustbein der Karkasse herabhängenden Brustfilets in den Bereich einer Vorrichtung zum vollständigen Trennen der Brustfilets vom Brustbein, Einfädeln des Brustbeins der Karkasse zwischen zwei nebeneinander und beabstandet zueinander liegende Führungselemente, Führen der Karkasse in Richtung von zwei beabstandet zueinander angeordneten Trennmitteln, Einfädeln des Brustbeins zwischen die Trennmittel, und vollständiges Trennen der Brustfilets mittels der nach oben aus den Führungselementen herausragenden Trennmittel.

Solche Vorrichtungen und Verfahren kommen üblicherweise in der Be- und Verarbeitung von Tierkörpern zum Einsatz. Die eingangs genannte Vorrichtung ist üblicherweise Bestandteil einer Bearbeitungsvorrichtung zur Bearbeitung von geschlachteten Tierkörpern, wobei unter Tierkörpern auch Tierkörperteile verstanden werden. Die Bearbeitungsvorrichtung ist insbesondere zur Be- und Verarbeitung von Geflügel (z.B. Huhn, Pute etc.), nämlich zum Filetieren von Brustkappen oder Vorderhälften eingerichtet. Die Bearbeitungsvorrichtung, insbesondere zum Entfernen des Fleisches von ausgenommenen Körpern geschlachteten, extremitätenlosen Geflügels, umfasst mehrere in einer Bearbeitungslinie angeordnete Bearbeitungsstationen und - werkzeuge sowie einen angetriebenen, umlaufenden Förderer mit daran längs der Bearbeitungslinie in Reihe angeordneten Haltevorrichtungen. Mittels dieser Haltevorrichtungen, die auch als Transportsattel bezeichnet werden, erfolgt der Transport der Tierkörper durch die Bearbeitungsvorrichtung und das Vorbeiführen derselben an den Bearbeitungsstationen und -werkzeugen.

Als Bearbeitungsstationen bzw. -werkzeuge weist eine Bearbeitungsvorrichtung oder - linie wenigstens solche auf, mittels der die Brustfilets (Hauptfilet mit oder ohne Tenderfilet) durch Schneiden und/oder Schaben teilweise von der Karkasse gelöst werden, so dass die Brustfilets letztlich noch im Bereich des Brustbeins an der Karkasse befestigt bzw. mit dieser verbunden sind. Üblicherweise werden die auf dem Transportsattel aufgesattelten Tierkörper zumindest im Bereich der Vorrichtung zum vollständigen Trennen der Brustfilets über Kopf transportiert, derart, dass das Brustbein nach unten weist. Der Transport der Tierkörper erfolgt in Richtung der Vorrichtung zum vollständigen Trennen der Brustfilets mit dem Gabelbein der Karkasse voraus, so dass das Brustbein mit einem voraus laufenden, dornartigen Abschnitt voraus die Vorrichtung zum vollständigen Trennen der Brustfilets von der Karkasse erreicht. Dabei besteht des Weiteren die anatomische Besonderheit, dass das Brustbein bei auf den Transportsattel aufgesatteltem Tierkörper entgegen der Transportrichtung T der Tierkörper nach hinten und schräg oben verläuft. In dieser Position, in der die Brustfilets zu beiden Seiten des Brustbeins nach unten hängen, erreicht der Tierkörper die Vorrichtung zum vollständigen Trennen der Brustfilets von der Karkasse, wobei die Brustfilets mindestens im hinteren, nachlaufenden Bereich des Brustbeins unter Bildung einer Falte zwischen den Brustfilets und dem Brustbein aneinander liegen.

In der Praxis und aus der EP 1 654 932 A2 sind solche Vorrichtungen bekannt, bei denen das Führungsmittel als starres Element eine Führung der Karkassen und der Brustfilets bis zum Eintritt des Brustbeins (im allgemeinen Sprachgebrauch wegen des kielförmigen Verlaufs des Brustbeins auch als Kielbone bezeichnet) bzw. des vorauslaufenden Doms des Brustbeins zwischen die Trennmittel ermöglicht. Die beiden das Führungsmittel bildenden Führungselemente sind beabstandet zueinander und nehmen das Brustbein der Karkasse zwischen sich auf. Die Brustfilets verlaufen - mit dem Brustbein zwischen den Führungselementen - unterhalb der Führungselemente, während der restliche Karkassenkörper oberhalb der Führungselemente verläuft. Sobald der Geflügelkörper die Trennmittel erreicht, werden die Brustfilets zusammengedrückt bzw. zusammengeschoben. Anders ausgedrückt führt das gleichzeitige Führen und Schneiden der Brustfilets dazu, dass die Brustfilets zusammengefaltet werden. Dieser Effekt verstärkt sich - insbesondere wegen der weiter oben erwähnten anatomischen Besonderheit des Brustbeins - ausgehend vom vorauslaufenden Ende des Brustbeins bis zum nachlaufenden Ende. Daraus resultieren Schnittfehler, die zum einen zum Ausbeuteverlust und zum anderen zu ungenügenden Qualitäten der abgetrennten Brustfilets führen.

Es besteht daher die Aufgabe, eine Vorrichtung zu schaffen, die das vollständige Entfernen der Brustfilets von der Karkasse optimiert. Des Weiteren besteht die Aufgabe darin, ein entsprechendes Verfahren vorzuschlagen.

Diese Aufgabe wird durch eine Vorrichtung der eingangs genannten Art dadurch gelöst, dass die Führungselemente aus einer den Spalt bildenden Führungsposition in eine den Abstand A zu den Trennmitteln vergrößernde Warteposition und umgekehrt schwenkbar sind und dass ein Spreizelement zum Spreizen der Brustfilets vom Brustbein weg während des Trennvorgangs vorgesehen ist. Mit dieser erfindungsgemäßen Ausbildung besteht die Möglichkeit, die Führungselemente unmittelbar nach dem Einfädeln des Brustbeins zwischen die beiden Trennmittel auseinander zu bewegen. Dadurch wird das Einklemmen der Brustfilets zwischen den Führungselementen einerseits und den Trennmitteln andererseits, das zur Faltenbildung während des Trennvorgangs führt, wirksam verhindert. Mit anderen Worten wird den herabhängenden Brustfilets eine Art Ausweichraum zum Abspreizen zur Verfügung gestellt, um ein Abhalten bzw. Abspreizen der Brustfilets vom Brustbein weg zu gewähren. Anders ausgedrückt wird durch die Schwenkfunktion der Führungselemente das Zusammenfalten der Brustfilets wirksam verhindert. Das erfindungsgemäße Spreizelement dient dazu, die Spreizbewegung der Brustfilets vom Brustbein weg auch tatsächlich auszuführen, indem das Spreizelement zwischen die Brustfilets eintaucht und diese seitlich nach außen vom Brustbein weg drückt. Zum anderen kann dadurch das Spreizelement entlang des Brustbeins bewegt werden, um die beiden vom Brustbein herunterhängenden Brustfilets über die Länge des Brustbeins nach außen zu drücken, so dass die Brustfilets zumindest im unmittelbaren Befestigungsbereich an dem Brustbein im Wesentlichen horizontal zur Seite gehalten werden. Die dann eingreifenden Trennmittel schneiden somit nicht in die Brustfilets sondern dringen zwischen den Brustfilets und dem Brustbein in den durch das Aufspreizen gebildeten Spalt, so dass die Brustfilets mit maximaler Ausbeute ganz nah am Brustbein getrennt werden können.

Eine zweckmäßige Weiterbildung der Erfindung zeichnet sich dadurch aus, dass die beiden Führungselemente in ihrer Führungsposition parallel zueinander verlaufen und um eine vertikal zur Transportebene E der Geflügelkörper verlaufende Schwenkachse S in horizontaler Richtung seitlich voneinander weg und aufeinander zu schwenkbar sind. Damit werden ein sehr kurzer Schwenkweg und eine schnelle Freigabe der Brustfilets zum Aufspreizen durch das Spreizelement gewährleistet, wodurch das Trennergebnis verbessert wird. Der Begriff Transportebene ist im vorliegenden Fall keine zweidimensionale Ebene im streng mathematischen Sinn. Da die Geflügelkörper, die Führungselemente etc. eine gewisse Dicke bzw. bauliche Höhe aufweisen, ist der Begriff lediglich dahingehend zu verstehen, dass die Geflügelkörper parallel zu der flächigen Oberseite der Führungselemente transportiert werden.

Vorteilhafterweise weisen die Führungselemente im Einlaufbereich M und/oder im Auslaufbereich N eine rampenförmige Anlaufschräge auf. Die vorzugsweise nach unten gerichteten Einlauf- und/oder Auslaufschrägen vereinfachen das kontrollierte Führen der Brustfilets unter die Führungselemente sowie das Einführen des Brustbeins in den Spalt zwischen den Führungselementen.

Eine besonders bevorzugte Ausführungsfom ist dadurch gekennzeichnet, dass die Führungselemente in der Höhe, also senkrecht zur Transportebene E, verstellbar ausgebildet sind. Mit dieser Weiterbildung der Erfindung wird gewährleistet, dass mit derselben Vorrichtung unterschiedliche Trennergebnisse, nämlich zum einen das Trennen der vollständigen Brustfilets, also Hauptfilet mit Tenderfilet, und zum anderen das Trennen nur des Hauptfilets, erreicht werden können. Beim Trennen der vollständigen Brustfilets verlaufen sowohl das Hauptfilet als auch das Tenderfilet unterhalb der Führungselemente (so genanntes "tender in"), weshalb für diesen Fall die Führungselemente höher angeordnet sind als beim Trennen nur der Hauptfilets. Bei der letztgenannten Variante verläuft das Hauptfilet unterhalb der Führungselemente, während das Tenderfilet oberhalb der Führungselemente (so genanntes "tender out") verläuft.

Vorzugsweise ist der horizontale Abstand A der beiden Führungselemente in ihrer Führungsposition einstellbar und beträgt vorzugsweise 3 bis 8mm und besonders bevorzugt 4 bis 5mm. Durch die Einstellbarkeit des Abstands kann die Vorrichtung auf unterschiedliche Tierkörpergrößen eingestellt werden.

Eine weitere zweckmäßige Weiterbildung zeichnet sich dadurch aus, dass die Trennmittel rotierend angetriebene Kreismesser sind. Kreismesser sind besonders geeignet, die bestehende Verbindung zwischen den Brustfilets und dem Brustbein, die üblicherweise aus einem schmalen Steg aus Fleisch und/oder Gewebe besteht, zu trennen, ohne die Brustfilets zu beschädigen.

Vorteilhafterweise sind die Kreismesser beabstandet zueinander einen Abstand B zwischen sich bildend angeordnet und in Transportrichtung T der Geflügelkörper mitlaufend angetrieben. Insbesondere der mitlaufende Antrieb, also der Antrieb, bei dem die Schneidkräfte mindestens teilweise in Transportrichtung T wirken, unterstützt den Geflügelkörper bzw. die von der Karkasse hängenden Brustfilets quasi beim Transport durch die Vorrichtung hindurch.

Es ist vorteilhaft, dass der Abstand A zwischen den beiden Führungselementen höchstens dem Abstand B zwischen den beiden Trennmitteln entspricht. Dadurch wird das Einfädeln des Brustbeins zwischen die beiden Trennmittel vereinfacht und insbesondere die "Übergabe" der Tierkörper von den Führungselementen an die Trennmittel erleichtert.

Eine besonders bevorzugte Ausführungsform ist dadurch gekennzeichnet, dass die Trennmittel bezüglich der Transportebene E auf und ab bewegbar ausgebildet sind. Damit wird gewährleistet, dass die Trennmittel erst dann aus den Führungselementen herausragen, wenn der eigentliche Trennvorgang der Brustfilets von der Karkasse beginnt. Mit anderen Worten sind die Trennmittel beim Einlauf der Geflügelkörper in die Trennmittel noch unter die Führungselemente zurückgezogen, damit dem Brustbein voraus laufende Bereiche der Karkasse, insbesondere das Gabelbein, nicht zerstört werden. Mit anderen Worten ermöglicht die Bewegbarkeit der Trennmittel das Ausweichen derselben von Bereichen, die nicht in Kontakt mit den Trennmitteln kommen sollen bzw. dürfen.

Vorteilhafterweise sind die Trennmittel zur Ausübung der auf und ab Bewegung kurvengesteuert um einen Schwenkpunkt schwenkbar. Mittels der Kurvensteuerung lassen sich besonders einfach und zuverlässig solche auf und ab Bewegungen steuern. Die Kurvensteuerung ermöglicht das stabile und präzise Steuern der Trennmittel bei schnellen Steuerbewegungen, wie sie in der erfindungsgemäßen Vorrichtung auftreten, da die Bearbeitungszyklen der Vorrichtung nur wenige Sekunden oder weniger pro Geflügelkörper/Karkasse betragen.

In einer besonders bevorzugten Ausführungsform der Erfindung ist das Spreizelement ein ortsfester und um eine Schwenkachse P schwenkbarer Spreizhebel, der in Transportrichtung T der Geflügelkörper im Einlaufbereich der Geflügelkörper in die Trennmittel angeordnet ist. Diese Ausführung stellt sicher, dass das Spreizelement optimal mit den Führungselementen zusammenwirken kann. Die Anordnung ermöglicht eine exakte Abstimmung des Öffnens der Führungselemente einerseits und des Eintauchens des Spreizelementes andererseits, wodurch optimal Trennergebnisse erzielt werden.

Zweckmäßigerweise liegt die Schwenkachse P des Spreizhebels unterhalb der Führungselemente, wobei im betätigungsfreien Zustand ein freies Ende des Spreizhebels nach oben in Richtung der Karkasse aus dem Führungsmittel herausragt, während das entgegen gesetzte freie Ende des Spreizhebels mittels eines Federelementes gegen einen Anschlag gedrückt ist. Dadurch wird auf einfache und sichere Weise gewährleistet, dass der in die Vorrichtung einlaufende Geflügelkörper in Kontakt mit dem Spreizhebel kommt. Durch die erfindungsgemäße Ausbildung ist sichergestellt, dass der Spreizhebel mit dem nach oben in Richtung der Karkasse weisenden freien Ende der Kontur des Brustbeins folgt, so dass das Aufspreizen der Brustfilets zur Vermeidung der Faltenbildung insbesondere im hinteren, nachlaufenden Bereich des Brustbeins gewährleistet ist.

Vorzugsweise liegt das nach oben in Richtung der Karkasse weisende freie Ende des Spreizhebels, nämlich ein Spreizfinger, zwischen den beiden Trennmitteln. Zum einen wird dadurch erreicht, dass die Brustfilets bereits beim Anschnitt, also beim Erstkontakt der Trennmittel mit den Brustfilets, durch die Trennmittel aufgespreizt sind. Zum anderen bietet die gestufte Ausbildung des Spreizhebels einen Kantenschutz für die Trennmittel. Anders ausgedrückt ist durch den gegenüber der Basis schmaler ausgebildeten Spreizfinger ein Absatz im Spreizhebel ausgebildet, wodurch die breitere Basis des Spreizhebels eine Art Abdeckung für die Trennmittel bildet. Diese Abdeckung schützt vom Brustbein herabhängende Abschnitte der Brustfilets vor einem Kontakt mit den Trennmitteln.

In einer besonders bevorzugten Weiterbildung der Erfindung ist zwischen den beiden Trennmitteln ein plattenartiges Schutzelement angeordnet, das in Transportrichtung T der Geflügelkörper im Einlaufbereich der Geflügelkörper in die Trennmittel in einem unterhalb der Führungsmittel liegenden Bereich aus den Trennmitteln hervorsteht. Dadurch wird ebenfalls eine Art Abdeckung für die Trennmittel gebildet. Allerdings liegt diese Abdeckung unterhalb der durch den Spreizhebel gebildeten Abdeckung, so dass die Trennmittel im Einlaufbereich M unterhalb der Führungselemente möglichst umfassend abgedeckt sind, um insbesondere auch die Verletzungsgefahr für die Bedienpersonen zu reduzieren.

Vorteilhafterweise ist den beiden Trennmitteln ein Abweiser zugeordnet, der die Schneidkanten der Trennmittel in Transportrichtung T der Geflügelkörper im Einlaufbereich M der Geflügelkörper in die Trennmittel unterhalb der Führungselemente und oberhalb des Spreizelementes mindestens teilweise abdeckt. Durch diese Schutzabdeckung wird eine zusätzliche Sicherheit zum einen für die Bedienperson und zum anderen für die herabhängenden Brustfilets gewährleistet.

Eine weitere zweckmäßige Ausführungsform der Erfindung ist dadurch gekennzeichnet, dass dem Führungsmittel im Auslaufbereich N ein Leitelement zugeordnet ist, wobei das Leitelement unterhalb des Führungsmittels liegt und bewegbar ausgebildet ist. Mittels des Leitelementes sind die abgetrennten Brustfilets zwangsläufig und zuverlässig aus der Vorrichtung zu führen. Das bedeutet, dass die Leitelemente einen Weitertransport der Brustfilets wirksam unterbinden. Durch die Bewegbarkeit der Leitelemente wird der Auslaufbereich N der Vorrichtung, also der Bereich unmittelbar hinter den Trennmitteln komplett freigegeben, so dass selbst solche Produkte oder Produktteile, die in der Vorrichtung verhakt oder anhaftend sind, aus der Vorrichtung fallen.

Die vorgenannte Ausführungsform ist bevorzugt dadurch weitergebildet, dass das Leitelement aus zwei Teilelementen besteht, wobei jedes Teilelement um eine horizontale Schwenkachse W verschwenkbar ist. Diese Ausführungsform ermöglicht das schnelle und zuverlässige Öffnen des Leitelementes zum Ausschleusen der abgetrennten Brustfilets.

Die Aufgabe wird auch durch ein Verfahren mit den eingangs genannten Schritten dadurch gelöst, dass die Führungselemente mit oder nach Eintritt des Brustbeins zwischen die Trennmittel seitlich auseinander geschwenkt und die Brustfilets während des Trennvorgangs vom Brustbein abgespreizt werden. Die sich daraus ergebenden Vorteile wurden bereits im Zusammenhang mit der Vorrichtung erläutert, weshalb zur Vermeidung von Wiederholungen auf die entsprechenden Passagen verwiesen wird.

Weitere vorteilhafte und/oder zweckmäßige Merkmale und Weiterbildungen ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine schematische Darstellung der Vorrichtung in Seitenansicht mit den Führungselementen in geschlossener Führungsposition,
- Fig. 2: eine Draufsicht auf die Vorrichtung gemäß Figur 1,
- Fig. 3: eine Darstellung der Vorrichtung gemäß Figur 1 entlang des Schnitts III-III,
- Fig. 4: eine schematische Darstellung der Vorrichtung in Seitenansicht mit den Führungselementen in offener Warteposition,
- Fig. 5: eine Draufsicht auf die Vorrichtung gemäß Figur 4, und
- Fig. 6: eine Darstellung der Vorrichtung gemäß Figur 4 entlang des Schnitts VI-VI.

Die Erfindung befasst sich mit einer Vorrichtung zum vollständigen Trennen bereits teilweise von der Karkasse eines entweideten Geflügelkörpers gelöster Brustfilets von der Karkasse. Die beschriebenen Ausführungsformen betreffen beispielhaft das Filetieren von Brustkappen eines Huhns. Selbstverständlich ist die erfindungsgemäße Vorrichtung auch zum Filetieren von Brustkappen/Vorderhälften anderer Geflügelkörper ausgebildet und eingerichtet.

Die in den Figuren dargestellte Vorrichtung 10 zum vollständigen Trennen bereits teilweise von der Karkasse eines entweideten Geflügelkörpers gelöster Brustfilets von der Karkasse umfasst ein Paar Trennmittel 11, 12 zum Trennen der zu beiden Seiten des Brustbeins der Karkasse herabhängenden Brustfilets vom Brustbein sowie Führungsmittel 13 zum Führen der Karkasse in Richtung der beiden beabstandet zueinander angeordneten Trennmittel 11, 12. Das Führungsmittel 13 umfasst zwei nebeneinander und beabstandet zueinander liegende Führungselemente 14, 15, die zwischen sich einen in Transportrichtung T der Geflügelkörper gerichteten Spalt 16 zur Aufnahme und zum Führen des Brustbeins der Karkasse bilden. Die Trennmittel 11, 12 tauchen in diesen Spalt 16 derart ein, dass die Trennmittel 11, 12 zum Trennen der Brustfilets vom Brustbein nach oben über das Führungsmittel 13 hinaus in Richtung der Karkasse ragen. Das bedeutet, dass das Brustbein beim Trennvorgang sowohl zwischen den Führungselementen 14, 15 als auch zwischen den Trennmitteln 11, 12 liegt, während die Trennmittel 11, 12 nach oben über das Führungsmittel 13 hinausragend den Trennschnitt ausführen.

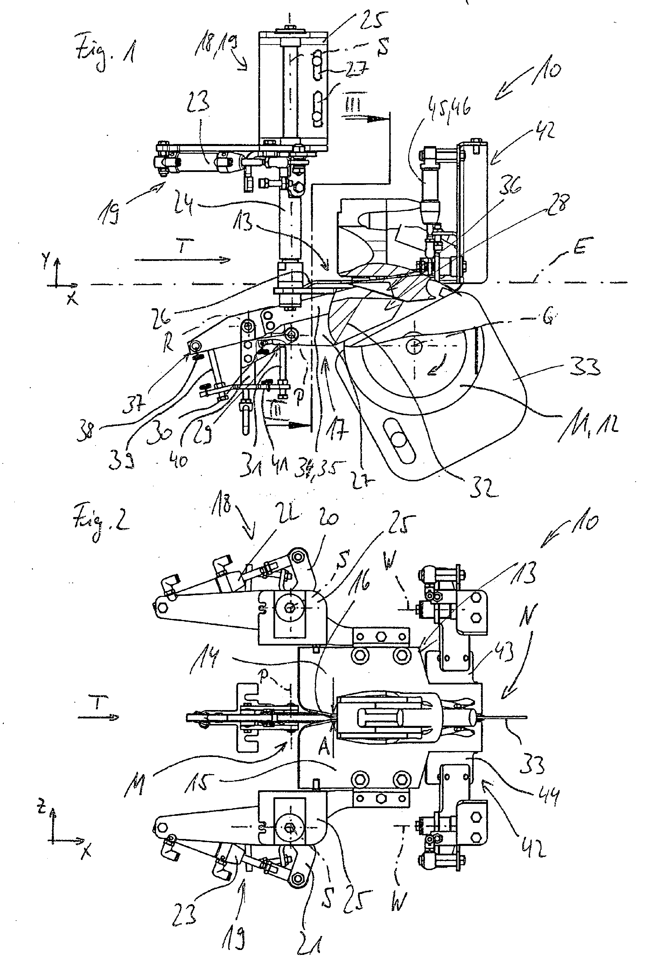

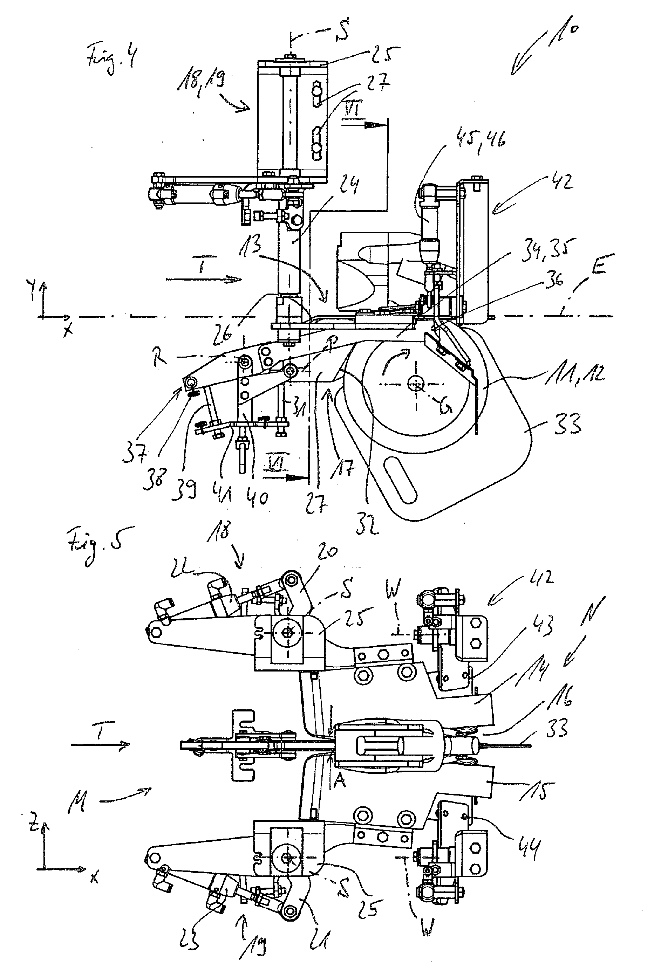

Eine solche Vorrichtung 10, die üblicherweise an einem Rahmen, einem Gestell oder einem Gehäuse einer Bearbeitungsvorrichtung befestigt ist, zeichnet sich erfindungsgemäß dadurch aus, dass die Führungselemente 14, 15 aus einer den Spalt 16 bildenden Führungsposition (siehe insbesondere Fig. 2) in eine den Abstand A zu den Trennmitteln 11, 12 vergrößernden Warteposition (siehe insbesondere Figur 5) und umgekehrt schwenkbar sind und dass ein Spreizelement 17 zum Spreizen der Brustfilets vom Brustbein weg während des Trennvorgangs vorgesehen ist. Durch die Kombination der Bewegbarkeit der Führungselemente 14, 15 einerseits und das Spreizelement 17 andererseits ist es möglich, die Brustfilets optimal vom Brustbein zu lösen. Zum Eintritt der Karkasse in die Vorrichtung 10 bzw. genauer zum Einfädeln des Brustbeins zwischen die Führungselemente 14, 15 stehen diese in der Führungsposition. Mit dem Einfädeln des Brustbeins zwischen die Trennmittel 11, 12 oder unmittelbar danach stehen die Führungselemente 14, 15 dann in der Warteposition, in der der Spalt 16 gegenüber der Führungsposition vergrößert ist. Somit hat das Spreizelement 17 ausreichend Platz/Raum zum Aufspreizen bzw. Abhalten der Brustfilets vom Brustbein zur Verfügung. Dadurch, dass die Brustfilets zumindest im Bereich ihrer Befestigung am Brustbein durch das Aufspreizelement 17 in eine etwa horizontale Ausrichtung gedrückt gehalten sind, trennen die Trennmittel 11, 12 in unmittelbarer Nachbarschaft zum Brustbein, das etwa parallel zu den Trennmitteln 11, 12 und zwischen diesen verläuft, die Fleisch- und/oder Gewebeverbindung zwischen dem Brustfilet und dem Brustbein. Ein Zusammenschieben der Brustfilets oder das Auffalten der Brustfilets beim Trennvorgang wird dadurch wirksam verhindert.

Die im Folgenden beschriebenen Merkmale und Weiterbildungen stellen jeweils für sich betrachtet oder in Kombination miteinander bevorzugte Ausführungsformen der Erfindung dar.

In einer bevorzugten Ausführungsform verlaufen die beiden Führungselemente 14, 15 in ihrer Führungsposition parallel zueinander und sind um eine vertikal zur Transportebene E (X-Z-Ebene in Figur 2) der Geflügelkörper verlaufende Schwenkachse S in horizontaler Richtung seitlich voneinander weg und aufeinander zu schwenkbar. Diese beiden gemeinsam oder individuell und bevorzugt synchron ansteuerbaren Schwenkelemente bzw. Führungselemente 14, 15 sind in der dargestellten Ausführungsform einfache Führungsbleche oder dergleichen, die an einem Schwenkmechanismus 18, 19 angeordnet sind. Der Schwenkmechanismus 18, 19 umfasst u.a. einen Schwenkhebel 20, 21, an dem die Führungselemente 14, 15 befestigt sind. Die Schwenkhebel 20, 21 sind über eine Welle 24, die die Schwenkachse S bildet, mittels eines Betätigungselementes 22, 23, beispielsweise eines Pneumatikzylinders, um die Schwenkachse S relativ zu einem Stützkörper 25 zur Erzielung einer Schwenkbewegung der Führungselemente 14, 15 drehbar. In alternativen Ausführungsformen sind selbstverständlich andere übliche Verstell- bzw. Schwenkmechanismen einsetzbar. Auch können linear verstellbare Führungselemente 14, 15 eingesetzt werden.

Die Führungselemente 14, 15 weisen eingangsseitig, also im Einlaufbereich M, und/oder ausgangsseitig, also im Auslaufbereich N, eine rampenförmige Anlaufschräge 26 auf. Diese in Bezug auf die Transportebene E vorzugsweise nach unten gerichtete Anlaufschräge 26 ist bevorzugt nur eingangsseitig ausgebildet und dient dazu, einerseits das Auflaufen der Karkasse auf die Führungselemente 14, 15 zu erleichtern und andererseits die vorgelösten und von der Karkasse bzw. genauer dem Brustbein herab hängenden Brustfilets unter die Führungselemente 14, 15 zu leiten, während die Karkasse oberhalb der Führungselemente 14, 15, mit dem Brustbein zwischen den Führungselementen 14, 15 transportiert wird. Die Führungselemente 14, 15 weisen im Einlaufbereich M optional eine Einführhilfe auf. Diese ist z.B. durch einen ausgehend vom Spalt 16 entgegen der Transportrichtung T sich aufweitenden Verlauf der Führungselemente 14, 15 gebildet. Diese Einführhilfe erleichtert insbesondere das Einfädeln des Brustbeins zwischen die Führungselemente 14, 15.

Die Führungselemente 14, 15 sind optional in der Höhe, also senkrecht zur Transportebene E, verstellbar ausgebildet. Diese Verstellung kann z.B. durch Austausch oder Verstellung des Stützkörpers 25 erfolgen. Es besteht auch die Möglichkeit, die Welle 24 teleskopisch auszubilden. Auch einfache mechanische Lösungen, beispielsweise durch den Einsatz von Distanzstücken oder dergleichen, sind zur Höhenverstellung möglich. Eine weitere Option der Vertikalverstellung der Führungselemente 14, 15 kann durch die Verstellung des gesamten Schwenkmechanismus 18, 19 z.B. über Langlöcher 27 in einer Gehäusewand der Bearbeitungsvorrichtung gebildet sein. Mittels der Verstellmöglichkeit lassen sich unterschiedliche Trennergebnisse erzielen. In einer unteren Position der Führungselemente 14, 15 erfolgt ein Trennschnitt mittels der Trennmittel 11, 12 ausschließlich für die Hauptfilets, da die Tenderfilets oberhalb der Führungselemente 14, 15 geführt sind. Wenn die Führungselemente 14, 15 in einer oberen Position stehen, werden die Tenderfilets ebenso wie die Hauptfilets unterhalb der Führungselemente 14, 15 geführt und entsprechend durch die Trennmittel 11, 12 mit abgetrennt. Neben der Verstellung der Führungselemente 14, 15 in der Höhe ist optional auch der horizontale Abstand A der beiden Führungselemente 14, 15 in ihrer Führungsposition, also die Breite des Spaltes 16, einstellbar. Bevorzugt beträgt die Spaltbreite 3 bis 8mm und besonders bevorzugt 4 bis 5 mm. Durch die Einstellbarkeit der Spaltbreite ist die Vorrichtung 10 an unterschiedliche Größen der Geflügelkörper mit entsprechend breiterem Brustbein anpassbar.

Die Trennmittel 11, 12 können stehende oder bewegte Klingen, Stichel oder andere scharfkantige Trennelemente sein. In der bevorzugten Ausgestaltung sind die Trennmittel 11, 12 jedoch rotierend angetriebene Kreismesser. Diese Kreismesser, die um eine horizontal verlaufende Rotationsachse G, die parallel zur Transportebene E ausgerichtet ist, vorzugsweise in Transportrichtung T mitlaufend angetrieben sind, sind parallel zueinander angeordnet und bilden zwischen sich einen Abstand B. Dieser Abstand B ist einstellbar. Bevorzugt entspricht der Abstand A zwischen den beiden Führungselementen 14, 15 dem Abstand B zwischen den beiden Kreismessern. Die

Abstände A und B können jedoch auch voneinander abweichen, wobei in diesem Fall bevorzugt ist, dass der Abstand A geringfügig kleiner als der Abstand B ist.

In einer bevorzugten Weiterbildung der Erfindung sind die Trennmittel 11, 12 bezüglich der Transportebene E auf und ab bewegbar ausgebildet. Das bedeutet, dass die Position der Trennmittel 11, 12 bezüglich der Transportebene E variabel ist. Würden die Trennmittel 11, 12 dauerhaft und permanent nach oben aus dem Führungsmittel 13 heraus ragen, bestünde die Gefahr der Kollision zwischen den Trennmitteln 11, 12 einerseits und der Karkasse und insbesondere dem vorauslaufenden Gabelbein andererseits. Aus diesem Grunde stehen die Trennmittel 11, 12 nur während des Trennvorgangs nach oben über das Führungsmittel 13 hinaus. Vor und nach dem Trennvorgang stehen die Trennmittel 11, 12 in einer tieferen Position derart, dass ein Kontakt zu der Karkasse ausgeschlossen ist. Bevorzugt sind die Trennmittel 11, 12 mit Ausnahme des Trennvorgangs hinter das Führungsmittel 13 zurückgezogen, so dass die Trennmittel 11, 12 gar nicht mehr über das Führungsmittel 13 hinaus ragen. Zum Steuern dieser Verstellbewegung sind übliche Maßnahmen geeignet. Besonders bevorzugt ist eine Ausführuhgsform, bei der die Trennmittel 11, 12 zur Ausübung der auf und ab Bewegung kurvengesteuert um einen Schwenkpunkt steuerbar sind. Es besteht aber auch die Möglichkeit, dass die Trennmittel 11, 12 motorisch z.B. in eine Linearbewegung getaktet und/oder zyklisch auf und ab bewegbar ausgebildet sind. Andere Möglichkeiten der Verstellung der Trennmittel 11, 12, beispielsweise mittels pneumatischer Stellglieder, sind aber ebenfalls einsetzbar. Eine Weiterbildung sieht vor, dass die Trennmittel 11, 12 gegen eine Federkraft auslenkbar sein können.

Wie bereits erwähnt, ist das Spreizelement 17 eine zentrale Komponente der Erfindung. Bevorzugt ist das Spreizelement 17 ein ortsfester und um eine Schwenkachse P schwenkbarer Spreizhebel 27, der in Transportrichtung T der Geflügelkörper im Einlaufbereich M der Geflügelkörper in die Trennmittel 11, 12 angeordnet ist. Mit anderen Worten kommt der Geflügelkörper beim Einlaufen in die Vorrichtung 10 in Kontakt mit dem Spreizhebel 27, bevor die Trennelemente 11, 12 in Kontakt mit den Brustfilets kommen. Dazu liegt die Schwenkachse P des Spreizhebels 27 unterhalb der Führungselemente 14, 15, wobei in betätigungsfreiem Zustand, wenn also kein Geflügelkörper in der Vorrichtung 10 ist, ein freies Ende 28 des Spreizhebels 27 nach oben in Richtung der Karkasse aus dem Führungsmittel 13 herausragt, während das entgegen gesetzte freie Ende 29 des Spreizhebels 27 mittels eines Federelementes 30 gegen einen Anschlag 31 gedrückt ist. Sobald ein Geflügelkörper bzw. eine Karkasse in Kontakt mit dem freien Ende 28 des Spreizhebels 27 kommt, wird dieser gegen die Federkraft des Federelementes 30 durch die Karkasse nach unten gedrückt, so dass sich das entgegen gesetzte freie Ende 29 vom Anschlag 31 löst. Solange sich die Karkasse in der Vorrichtung 10 befindet, fährt das freie Ende 28 des Spreizhebels 27 unter seitlichem Abspreizen der beiden seitlich von der Karkasse herabhängenden Brustfilets entlang der Kontur bzw. des Verlaufs des Brustbein an diesem entlang.

Das nach oben in Richtung der Karkasse weisende freie Ende 28 des Spreizhebels 27, das als Spreizfinger ausgebildet ist, liegt zwischen den Trennmitteln 11, 12. Die Breite des Spreizfingers ist demnach geringer als der Abstand B zwischen den beiden Trennmitteln 11, 12. Allerdings ist es bevorzugt, wenn die Breite des Spreizfingers nur geringfügig kleiner ist als der Abstand B, so dass der Spreizfinger eine möglichst große Anlagefläche an der Karkasse bzw. dem Brustbein bildet. Der Spreizfinger kann auf der dem Brustbein zugewandten Seite flach ausgebildet sein. Alternativ kann der Spreizfinger mit seiner Kontaktfläche auch an die Kontur des Brustbeins angepasst sein, wodurch neben der Spreizfunktion für die Brustfilets gleichzeitig eine Führungsfunktion für das Brustbein und damit für die Karkasse gebildet ist.

Der Spreizhebel 27 ragt durch die gewählte Breite demnach mit dem Spreizfinger zwischen die Trennmittel 11, 12. Durch eine schmalere Ausbildung des Spreizfingers gegenüber dem Grundkörper des Spreizhebels 27 kann ein Absatz 32 gebildet sein, so dass der dickere Abschnitt des Spreizhebels 27 eine Art Abdeckung für die Trennmittel 11, 12 bildet. Dadurch, dass der Absatz 32 die scharfen Kanten der Trennmittel 11, 12 in Transportrichtung T abdeckt, sind die einlaufenden Geflügelkörper und insbesondere die von der Karkasse bzw. dem Brustbein herabhängenden Brustfilets gegen Beschädigung geschützt. Der Absatz 32 bildet gleichzeitig einen Schutz für die Bedienperson.

Das Spreizelement 17 kann auch auf andere Weise ausgebildet sein. Beispielsweise besteht die Möglichkeit, dass das Spreizelement 17 eine in Transportrichtung T vor den Trennmitteln 11, 12 angeordnet Spreizgabel ist, mittels der die Brustfilets auseinander drückbar sind. Das Spreizelement 17 kann auch eine stempelartige Komponente sein, die aus einer zurückgezogenen Position in eine Spreizposition und umgekehrt bringbar ist.

In einer weiteren zweckmäßigen Weiterbildung kann zwischen den Trennmitteln 11, 12 ein plattenartiges Schutzelement 33 angeordnet sein, das in Transportrichtung T der Geflügelkörper im Einlaufbereich M der Geflügelkörper in die Trennmittel 11, 12 in einem unterhalb der Führungsmittel 13 liegenden Bereich aus den Trennmitteln 11, 12 hervorsteht. Das Schutzelement 33, das z.B. auf der Rotationsachse G der Kreismesser gelagert sein kann, steht mit einer Kante entgegen der Transportrichtung T aus den Trennmitteln 11, 12 hervor, so dass einlaufende Geflügelkörper bzw. deren herabhängenden Brustfilets wenn überhaupt nur gegen das Schutzelement 33 prallen. In erster Linie dient dieses Schutzelement 33 jedoch der Sicherheit der Bedienperson, da die scharfen Trennkanten der Trennmittel 11, 12 geschützt sind. Das Schutzelement 33 bzw. der aus den Trennmitteln 11, 12 hervorstehende Abschnitt des Schutzelementes 33 ist unterhalb der Spreizelementes 17 angeordnet.

Vorzugsweise ist beiden Trennmitteln 11, 12 ein Abweiser 34, 35 zugeordnet, der die Schneidkanten der Trennmittel 11, 12 in Transportrichtung T der Geflügelkörper im Einlaufbereich M der Geflügelkörper in die Trennmittel 11, 12 unterhalb der Führungselemente 14, 15 und oberhalb des Spreizelementes 17 mindestens teilweise abdeckt. Durch diese Ausführung sind die Schneidkanten der Trennmittel 11, 12 noch besser gesichert. Die Abweiser 34, 35 sind vorzugsweise korrespondierend zu dem Spreizelement 17 ausgebildet, indem die Abweiser 34, 35 ortsfeste und um eine Schwenkachse R schwenkbare Schwenkhebel sind, die in Transportrichtung T der Geflügelkörper im Einlaufbereich M der Geflügelkörper in die Trennmittel 11, 12 angeordnet sind. Ein freies Ende 36 des Schwenkhebels deckt die Schneidkanten der Trennmittel 11, 12 ab, während das entgegen gesetzte freie Ende 37 mittels eines Federelementes 38 gegen einen Anschlag 39 gedrückt ist.

In der bevorzugten und in den Figuren dargestellten Ausführungsform bilden das Spreizelement 17 und die Abweiser 34, 35 eine bauliche Einheit. Genauer sind das Spreizelement 17 und die Abweiser 34, 35 an einem gemeinsamen Träger 40 angeordnet, der an einem Maschinenrahmen, Gestell oder dergleichen befestigt ist. An dem Träger 40 ist ein Stützkörper 41 angeordnet, dem die Anschläge 31, 39 zugeordnet sind. Die Anschläge 31, 39 sind vorzugsweise Stellschrauben oder dergleichen. Dadurch sind die Anschläge 31, 39 in ihrer Position verstellbar. Das Spreizelement 17 und die Abweiser 34, 35 können aber auch getrennt voneinander ausgebildet und angeordnet sein. In der beschriebenen Ausführungsform sind sowohl das Spreizelement 17 als auch die Abweiser durch den Geflügelkörper selbst auslenk- und steuerbar. Im Übrigen besteht aber auch die Option, das Spreizelement 17 und die Abweiser 34, 35 durch andere Betätigungsorgane aktiv zu steuern.

Optional ist dem Führungsmittel 13 im Auslaufbereich N ein Leitelement 42 zugeordnet, wobei das Leitelement 42 unterhalb des Führungsmittels 13 liegt und bewegbar ausgebildet ist. Das Leitelement 42, das bevorzugt aus zwei Teilelementen 43, 44 besteht, wobei jedes Teilelement 43, 44 um eine horizontale Schwenkachse W verschwenkbar ist, dient dazu, die gelösten Brustfilets zuverlässig aus der Vorrichtung 10 zu leiten. Dazu sind die Teilelemente 43, 44 gebogen bzw. abgekantet ausgebildet, indem die Teilelemente 43, 44 zunächst bezogen auf die Transportebene E schräg nach unten und dann vertikal nach unten gerichtet sind. Die vertikal nach unten gerichteten Abschnitte der Teilelemente 43, 44 dienen dabei als eine Art Prallplatte, die ein unerwünschtes Weiterführen der abgetrennten Brustfilets unterbinden. Die Schwenkbarkeit der Teilelemente 43, 44 um die Schwenkachsen W, die parallel zur Transportebene E verlaufen, ist durch Betätigungsorgane 45, 46 auslösbar. In der beschriebenen Ausführungsform sind die Betätigungsorgane 45, 46 Pneumatikzylinder.

Die beschriebene Vorrichtung 10 kann eine zentrale Steuereinheit oder mehrere einzelne Steuereinheiten umfassen, die miteinander kommunizieren. Mit anderen Worten sind die zuvor beschriebenen Einstell- und Verstellmöglichkeiten sowie Antriebe aufeinander abstimmbar, so dass ein kollisionsfreier und an die Größe der Geflügelkörper angepasster Trennvorgang bzw. Trennzyklus durchgeführt werden kann.

Im Folgenden wird das bevorzugte Verfahrensprinzip anhand der beigefügten Zeichnung und eines einzelnen auf eine Haltevorrichtung aufgesattelten Geflügelkörpers bzw. einer einzelnen Karkasse näher erläutert:

Die Karkasse wird mit dem Gabelbein voraus und dem Brustbein nach unten gerichtet in Richtung der Vorrichtung 10 transportiert. Bevor die Karkasse die Vorrichtung 10 erreicht, steht das freie Ende 28 des Spreizhebels 27 nach oben über die Führungselemente 14, 15 hinaus. Durch den kontinuierlichen Transport der Karkasse in Transportrichtung T fädelt die Karkasse mit dem Brustbein bzw. dessen voraus laufendem, dornartigen Abschnitt zwischen die Führungselemente 14, 15 ein. Der Karkassenkörper selbst wird dabei oberhalb der Führungselemente 14, 15 transportiert, während die von dem Brustbein herabhängenden Brustfilets unterhalb der Führungselemente 14, 15 transportiert werden. Dieser Fall tritt ein, wenn das gesamte Brustfilet, also Hauptfilet und Tenderfilet, von der Karkasse getrennt werden sollen. Wenn ausschließlich das Hauptfilet abgetrennt werden soll, erfolgt bezüglich der Führung im Einlaufbereich M in die Führungselemente 14, 15 eine Art Weichenstellung, indem die Hauptfilets unterhalb der Führungselemente 14, 15 transportiert werden, während die Tenderfilets oberhalb der Führungselemente 14, 15 transportiert werden.

Mit zunehmendem Transport der Karkasse in Transportrichtung T trifft die Karkasse mit ihrem Brustbein auf das aus den Führungselemente 14, 15 nach oben vorstehende Spreizelement 17. Genauer kommt das Brustbein in Kontakt mit dem Spreizfinger des Spreizhebels 27, bevor die Karkasse die Trennmittel 11, 12 erreicht. Der Spreizhebel 27 wird durch die Karkasse gegen eine Federkraft nach unten gedrückt. Dadurch drückt sich der Spreizhebel 27 während des Transports der Karkasse durch die Vorrichtung 10 von unten gegen das Brustbein und folgt dessen Kontur, so dass der Spreizhebel 27 die von der Karkasse bzw. genauer vom Brustbein herabhängenden Brustfilets seitlich auseinander vom Brustbein weg spreizt.

Wie erwähnt ist das Brustbein zwischen den Führungselementen 14, 15 in dem Spalt 16 in Richtung der Trennmittel 11, 12 geführt. Mit Erreichen der Trennmittel 11,12 oder unmittelbar nach Erreichen der Trennmittel 11, 12 durch das Brustbein schwenken die Führungselemente 14, 15 seitlich auseinander. Mit anderen Worten werden die Führungselemente 14, 15 mit oder nach Eintritt bzw. Einfädeln des Brustbeins zwischen die Trennmittel 11, 12 aus ihrer Führungsposition um die Schwenkachse S seitlich in eine Warteposition geschwenkt. In der Warteposition ist der Abstand A zwischen den Führungselemente 14, 15 größer als in der Führungsposition. Mit diesem Aufschwenken wird dem Spreizelement 17 die Möglichkeit gegeben, unter Abspreizen der Brustfilets entlang des Brustbeins geführt zu werden, wie dies weiter oben beschrieben wurde.

Nachdem die Karkasse mit ihrem vorauslaufenden Abschnitt, nämlich dem Gabelbein, die Trennmittel 11, 12 in Transportrichtung T passiert hat, werden die Trennmittel 11, 12 aus einer zurückgezogenen Position, in der sie die Karkasse mit dem voraus laufenden Gabelbein kollisionsfrei passieren lassen, nach oben in die Trennposition bewegt, in der die Trennmittel 11, 12 nach oben aus den Führungselementen 14, 15 herausragen. Mit den Trennmitteln 11, 12 werden die Brustfilets zu beiden Seiten des Brustbeins vollständig von der Karkasse abgetrennt. Dazu tauchen die Trennmittel 11, 12 unmittelbar neben dem Brustbein in den durch das Spreizelement 17 geschaffenen Abstand zwischen den Brustfilets einerseits und dem Brustbein andererseits. Anschließend tauchen die Trennmittel 11, 12 wieder nach unten ab, um der nächsten Karkasse einen kollisionsfreien Zugang zu der Vorrichtung 10 zu verschaffen.

Nach Abschluss eines vollständigen Trennzyklus werden die Führungselemente 14, 15 wieder zurück in ihre Führungsposition geschwenkt, um eine nachfolgende Karkasse aufzunehmen.

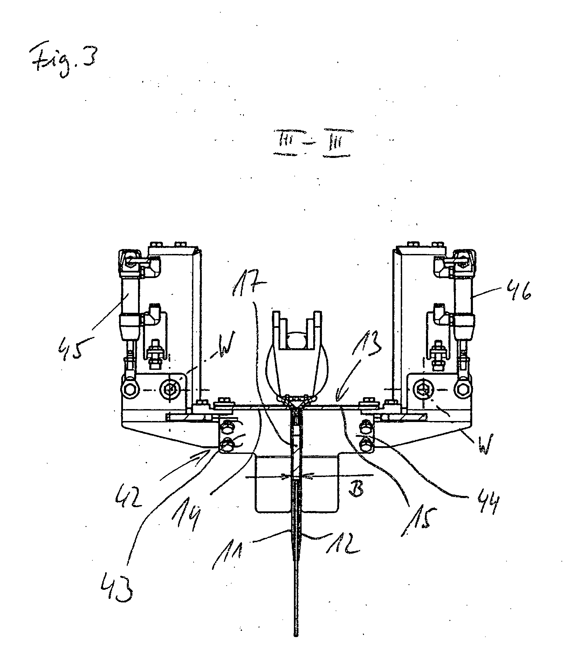

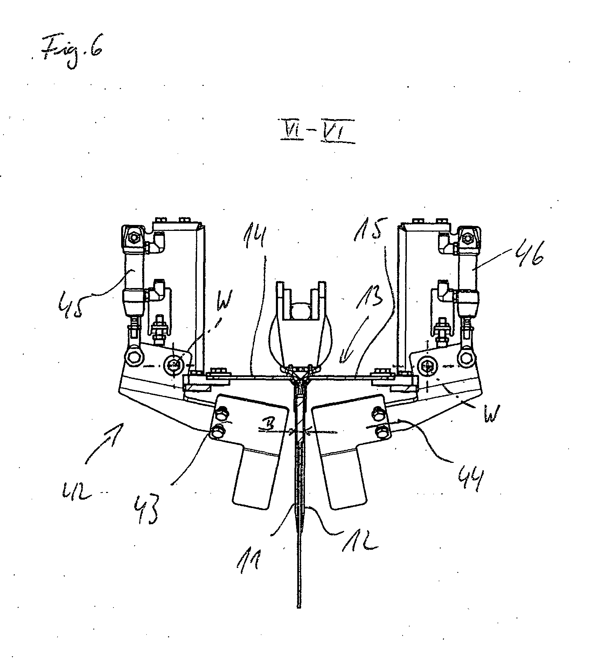

Optional laufen die abgetrennten Brustfilets im Auslaufbereich N gegen das Leitelement 42. Spätestens nach Abschluss des Trennvorgangs können die das Leitelement 42 bildenden Teilelemente 43, 44 um die Schwenkachse W nach unten weggeschwenkt werden, wodurch der Bereich zwischen den Teilelementen 43, 44 und den Trennmitteln 11, 12 freigegeben wird (vergleiche Figuren 3 und 6), so dass die Brustfilets nach unten aus der Vorrichtung 10 fallen. Bevor eine nachfolgende Karkasse das Leitelement 42 erreicht, werden die Teilelemente 43, 44 wieder zurück in ihre Sperrstellung zurückgeschwenkt.

## Patentansprüche

1. Vorrichtung (10) zum vollständigen Trennen bereits teilweise von der Karkasse eines entweideten Geflügelkörpers gelöster Brustfilets von der Karkasse, umfassend ein Paar Trennmittel (11, 12) zum Trennen der zu beiden Seiten des Brustbeins der Karkasse herabhängenden Brustfilets vom Brustbein sowie Führungsmittel (13) zum Führen der Karkasse in Richtung der beiden beabstandet zueinander angeordneten Trennmittel (11, 12), wobei das Führungsmittel (13) zwei nebeneinander und beabstandet zueinander liegenden Führungselemente (14, 15) umfasst, die zwischen sich einen in Transportrichtung T der Geflügelkörper gerichteten Spalt (16) zur Aufnahme und zum Führen des Brustbeins der Karkasse bilden und wobei die Trennmittel (11, 12) von unten in diesen Spalt (16) derart eintauchen, dass die Trennmittel (11, 12) zum Trennen der Brustfilets vom Brustbein nach oben über das Führungsmittel (13) hinaus in Richtung der Karkasse ragen, **dadurch gekennzeichnet, dass** die Führungselemente (14, 15) aus einer den Spalt (16) bildenden Führungsposition in eine den Abstand A zu den Trennmitteln (11, 12) vergrößernde Warteposition und umgekehrt schwenkbar sind und dass ein Spreizelement (17) zum Spreizen der Brustfilets vom Brustbein weg während des Trennvorgangs vorgesehen ist.

2. Vorrichtung nach Anspruch 1, **dadurch gekennzeichnet, dass** die beiden Führungselemente (14, 15) in ihrer Führungsposition parallel zueinander verlaufen und um eine vertikal zur Transportebene E der Geflügelkörper verlaufende Schwenkachse S in horizontaler Richtung seitlich voneinander weg und aufeinander zu schwenkbar sind.

3. Vorrichtung nach Anspruch 1 oder 2, **dadurch gekennzeichnet, dass** die Führungselemente (14, 15) im Einlaufbereich M und/oder im Auslaufbereich N eine rampenförmige Anlaufschräge (26) aufweisen.

4. Vorrichtung nach einem der Ansprüche 1 bis 3, **dadurch gekennzeichnet, dass** die Führungselemente (14, 15) in der Höhe, also senkrecht zur Transportebene E, verstellbar ausgebildet sind.

5. Vorrichtung nach einem der Ansprüche 1 bis 4, **dadurch gekennzeichnet, dass** der horizontale Abstand A der beiden Führungselemente (14, 15) in ihrer Führungsposition einstellbar ist und vorzugsweise 3 bis 8mm und besonders bevorzugt 4 bis 5mm beträgt.

6. Vorrichtung nach einem der Ansprüche 1 bis 5, **dadurch gekennzeichnet, dass** die Trennmittel (11, 12) rotierend angetriebene Kreismesser sind.

7. Vorrichtung nach Anspruch 6, **dadurch** gekennzeiclmet, **dass** die beiden Kreismesser beabstandet zueinander einen Abstand B zwischen sich bildend angeordnet und in Transportrichtung T der Geflügelkörper mitlaufend angetrieben sind.

8. Vorrichtung nach Anspruch 7, **dadurch gekennzeichnet, dass** der Abstand A zwischen den beiden Führungselementen (14, 15) höchstens dem Abstand B zwischen den beiden Kreismessern entspricht.

9. Vorrichtung nach einem der Ansprüche 1 bis 8, **dadurch gekennzeichnet, dass** die Trennmittel (11, 12) bezüglich der Transportebene E auf und ab bewegbar ausgebildet sind.

10. Vorrichtung nach Anspruch 9, **dadurch gekennzeichnet, dass** die Trennmittel (11, 12) zur Ausübung der auf und ab Bewegung kurvengesteuert um einen Schwenkpunkt schwenkbar sind.

11. Vorrichtung nach einem der Ansprüche 1 bis 10, **dadurch gekennzeichnet, dass** das Spreizelement (17) ein ortsfester und um eine Schwenkachse P schwenkbarer Spreizhebel (27) ist, der in Transportrichtung T der Geflügelkörper im Einlaufbereich M der Geflügelkörper in die Trennmittel (11, 12) angeordnet ist.

12. Vorrichtung nach Anspruch 11, **dadurch gekennzeichnet, dass** die Schwenkachse P des Spreizhebels (27) unterhalb der Führungselemente (14, 15) liegt, wobei im betätigungsfreien Zustand ein freies Ende (28) des Spreizhebels (27) nach oben in Richtung der Karkasse aus dem Führungsmittel (13) herausragt, während das entgegen gesetzte freie Ende (29) des Spreizhebels (27) mittels eines Federelementes (30) gegen einen Anschlag (31) gedrückt ist.

13. Vorrichtung nach Anspruch 12, **dadurch gekennzeichnet, dass** das nach oben in Richtung der Karkasse weisende freie Ende (28) des Spreizhebels (27), nämlich ein Spreizfinger, zwischen den beiden Trennmitteln (11, 12) liegt.

14. Vorrichtung nach einem der Ansprüche 1 bis 13, **dadurch gekennzeichnet, dass** zwischen den beiden Trennmitteln (11, 12) ein plattenartiges Schutzelement (33) angeordnet ist, das in Transportrichtung T der Geflügelkörper im Einlaufbereich M der Geflügelkörper in die Trennmittel (11, 12) in einem unterhalb der Führungsmittel (13) liegenden Bereich aus den Trennmitteln (11, 12) hervorsteht.

15. Vorrichtung nach einem der Ansprüche 1 bis 14, **dadurch gekennzeichnet, dass** den beiden Trennmitteln (11, 12) ein Abweiser (34, 35) zugeordnet ist, der die Schneidkanten der Trennmittel (11, 12) in Transportrichtung T der Geflügelkörper im Einlaufbereich M der Geflügelkörper in die Trennmittel (11, 12) unterhalb der Führungselemente (14, 15) mindestens teilweise abdeckt.

16. Vorrichtung nach einem der Ansprüche 1 bis 15, **dadurch gekennzeichnet, dass** dem Führungsmittel (13) im Auslaufbereich N ein Leitelement (42) zugeordnet ist, wobei das Leitelement (42) unterhalb des Führungsmittels (13) liegt und bewegbar ausgebildet ist.

17. Vorrichtung nach Anspruch 16, **dadurch gekennzeichnet, dass** das Leitelement (42) aus zwei Teilelementen (43, 44) besteht, wobei jedes Teilelement (43, 44) um eine horizontale Schwenkachse W verschwenkbar ist.

18. Verfahren zum vollständigen Trennen bereits teilweise von der Karkasse eines entweideten Geflügelkörpers gelöster Brustfilets von der Karkasse insbesondere mit einer Vorrichtung nach einem der Ansprüche 1 bis 17 mit den Schritten:
- Zuführen der Karkasse mit den bereits teilweise gelösten und vom Brustbein der Karkasse herabhängenden Brustfilets in den Bereich einer Vorrichtung (10) zum vollständigen Trennen der Brustfilets vom Brustbein,
- Einfädeln des Brustbeins der Karkasse zwischen zwei nebeneinander und beabstandet zueinander liegende Führungselemente (14, 15),
- Führen der Karkasse in Richtung von zwei beabstandet zueinander angeordneten Trennmitteln (11, 12),
- Einfädeln des Brustbeins zwischen die Trennmittel (11, 12), und
- vollständiges Trennen der Brustfilets mittels der nach oben aus den
Führungselementen (14, 15) herausragenden Trennmittel (11, 12),
**dadurch gekennzeichnet, dass** die Führungselemente (14, 15) mit oder nach Eintritt des Brustbeins zwischen die Trennmittel (11, 12) seitlich auseinander geschwenkt und die Brustfilets während des Trennvorgangs vom Brustbein abgespreizt werden.

19. Verfahren nach Anspruch 18, **dadurch gekennzeichnet, dass** die Führungselemente (14, 15) um eine Schwenkachse S geschwenkt werden und ein Spreizelement (17) zum Abspreizen der Brustfilets während des Trennvorgangs entlang der Kontur des Brustbeins geführt wird.

20. Verfahren nach Anspruch 18 oder 19, **dadurch gekennzeichnet, dass** das Spreizelement (17) durch die Karkasse gesteuert wird.

## Claims

1. Apparatus (10) for completely separating from the carcass of a gutted poultry body breast fillets that have already been partially detached from the carcass, comprising a pair of separating means (11, 12) for separating the breast fillets hanging down on both sides of the breast bone of the carcass from the breast bone as well as guiding means (13) for guiding the carcass in the direction of the two separating means (11, 12) arranged at a distance from one another, wherein the guiding means (13) comprises two guiding elements (14, 15) lying next to one another and at a distance from one another, which between them form a gap (16) which is directed in the transport direction T of the poultry bodies for receiving and guiding the breast bone of the carcass, and wherein the separating means (11, 12) enter this gap (16) from below in such a way that the separating means (11, 12) for separating the breast fillets from the breast bone protrude upwards beyond the guiding means (13) in the direction of the carcass, **characterised in t h a** the guiding elements (14, 15) are pivotable out of a guiding position forming the gap (16) into a waiting position increasing the distance A to the separating means (11, 12) and vice versa and **in that** a spreading element (17) for spreading the breast fillets away from the breast bone during the separating operation is provided.

2. Apparatus according to claim 1, **characterised in that** the two guiding elements (14, 15) in their guiding position run parallel to one another and are pivotable laterally away from one another and towards one another in the horizontal direction around a pivot axis S running vertical to the transport plane E of the poultry bodies.

3. Apparatus according to claim 1 or 2, **characterised in that** the guiding elements (14, 15) in the infeed area M and/or in the discharge area N have a ramp-like chamfer (26).

4. Apparatus according to any one of claims 1 to 3, **characterised in that** the guiding elements (14, 15) are designed in a height-adjustable manner, i.e. perpendicular to the transport plane E.

5. Apparatus according to any one of claims 1 to 4, **characterised in that** the horizontal distance A of the two guiding elements (14, 15) is adjustable in their guiding position and is preferably 3 to 8 mm and particularly preferably 4 to 5 mm.

6. Apparatus according to any one of claims 1 to 5, **characterised in that** the separating means (11, 12) are rotatingly driven circular knives.

7. Apparatus according to claim 6, **characterised in that** the two circular knives are arranged at a distance from one another forming a distance B between one another and are driven following the transport direction T of the poultry bodies.

8. Apparatus according to claim 7, **characterised in that** the distance A between the two guiding elements (14, 15) corresponds at most to the distance B between the two circular knives.

9. Apparatus according to any one of claims 1 to 8, **characterised in that** the guiding elements (11, 12) are designed to be moveable in an up and down manner with respect to the transport plane E.

10. Apparatus according to claim 9, **characterised in that** the separating means (11, 12) are pivotable in a cam-controlled manner around a pivot point in order to execute the up and down movement.

11. Apparatus according to any one of claims 1 to 10, **characterised in that** the spreading element (17) is a stationary spreading lever (27) pivotable around a pivot axis P, which is arranged in transport direction T of the poultry bodies in the area M of in-feed of the poultry bodies into the separating means (11, 12).

12. Apparatus according to claim 11, **characterised in that** the pivot axis P of the spreading lever (27) lies below the guiding elements (14, 15), wherein in the actuation-free state a free end (28) of the spreading lever (27) protrudes upwards in the direction of the carcass out of the guiding means (13), while the opposite free end (29) of the spreading lever (27) is pushed against an abutment (31) by means of a spring element (30).

13. Apparatus according to claim 12, **characterised in that** the free end (28) of the spreading lever (27), namely a spreading finger, pointing upwards in the direction of the carcass lies between the two separating means (11, 12).

14. Apparatus according to any one of claims 1 to 13, **characterised in that** a platelike protection element (33) is arranged between the two separating means (11, 12), which protrudes from the separating means (11, 12) in transport direction T of the poultry bodies in the area M of in-feed of the poultry bodies into the separating means (11, 12) into an area lying below the guiding means (13).

15. Apparatus according to any one of claims 1 to 14, **characterised in that** a deflector (34, 35) is assigned to both separating means (11, 12), which at least partially covers the cutting edges of the separating means (11, 12) in transport direction T of the poultry bodies in the area M of in-feed of the poultry bodies into the separating means (11, 12) below the guiding elements (14, 15).

16. Apparatus according to any one of claims 1 to 15, **characterised in that** a guide element (42) is assigned to the guiding means (13) in the discharge area N, wherein the guide element (42) lies below the guiding means (13) and is designed in a movable manner.

17. Apparatus according to claim 16, **characterised in that** the guide element (42) consists of two partial elements (43, 44), wherein each partial element (43, 44) is pivotable around a horizontal pivot axis W.

18. Method for completely separating from the carcass of a gutted poultry body breast fillets that have already been partially detached from the carcass, in particular with an apparatus according to any one of claims 1 to 17 with the steps:
- guiding of the carcass with the already partially detached breast fillets hanging down from the breast bone of the carcass into the area of an apparatus (10) for completely separating the breast fillets from the breast bone,
- threading the breast bone of the carcass between two guiding elements (14, 15) lying next to one another and at a distance from one another,
- guiding of the carcass in the direction of two separating means (11, 12) arranged at a distance from one another,
- threading of the breast bone between the separating means (11, 12) and
- complete separation of the breast fillets by means of the separating
means (11, 12) protruding upwards out of the guiding elements (14, 15),
**characterised in that** the guiding elements (14, 15) with or after entry of the breast bone between the separating means (11, 12) are pivoted apart laterally and the breast fillets are spread apart during the separating operation from the breast bone.

19. Method according to claim 18, **characterised in that** the guiding elements (14, 15) are pivoted around a pivot axis S and a spreading element (17) is guided for spreading apart the breast fillets during the separating operation along the contour of the breast bone.

20. Method according to claim 18 or 19, **characterised in that** the spreading element (17) is controlled by the carcass.

## Revendications

1. Dispositif (10) destiné à la séparation complète de la carcasse d'un filet de poitrine déjà partiellement séparé de la carcasse d'un corps de volaille éviscéré, comprenant une paire de dispositifs de séparation (11, 12) pour séparer du sternum les filets de poitrine pendant des deux côtés du sternum de la carcasse ainsi qu'un dispositif de guidage (13) pour guider la carcasse en direction des deux dispositifs de séparation (11, 12) espacés l'un par rapport à l'autre, le dispositif de guidage (13) comportant deux éléments de guidage (14, 15), situés côte à côte et espacés l'un de l'autre, qui forment entre eux une fente (16) dirigée dans la direction de transport T des corps de volailles pour la réception et le guidage du sternum de la carcasse, les dispositifs de séparation (11, 12) plongeant de telle sorte que, par le bas sous cette fente (16), les dispositifs de séparation (11, 12) pour la séparation du filet de poitrine à partir du sternum fassent saillie vers le haut au-dessus du dispositif de guidage (13) en direction de la carcasse, qui est **caractérisé en ce que** les éléments de guidage (14, 15) peuvent être orientés, à partir d'une position de guidage formant la fente (16), vers une position d'attente augmentant l'écart A par rapport aux dispositifs de séparation (11, 12) et inversement et qu'un élément d'écartement (17) est prévu pour l'écartement du filet de poitrine à partir du sternum au cours du procédé de séparation.

2. Dispositif selon la revendication 1, **caractérisé en ce que** les deux éléments de guidage (14, 15) évoluent parallèlement l'un par rapport à l'autre dans leur position de guidage et peuvent pivoter latéralement en se rapprochant ou s'éloignant l'un de l'autre autour d'un axe de pivotement S vertical par rapport au plan de transport E des corps de volailles dans la direction horizontale.

3. Dispositif selon la revendication 1 ou 2, **caractérisé en ce que** les éléments de guidage (14, 15) présentent dans la zone d'entrée M et/ou la zone de sortie N une pente d'accès en forme de rampe (26).

4. Dispositif selon l'une des revendications 1 à 3, **caractérisé en ce que** les éléments de guidage (14, 15) sont agencés de façon à être réglables en hauteur, c'est-à-dire perpendiculairement au plan de transport E.

5. Dispositif selon l'une des revendications 1 à 4, **caractérisé en ce que** l'écart horizontal A des deux éléments de guidage (14, 15) est réglable dans leur position de guidage de préférence de 3 à 8 mm et de façon particulièrement préférée de 4 à 5 mm.

6. Dispositif selon l'une des revendications 1 à 5, **caractérisé en ce que** les dispositifs de séparation (11, 12) sont des lames circulaires entraînées en rotation.

7. Dispositif selon la revendication 6, **caractérisé en ce que** les deux lames circulaires sont disposées espacées l'une par rapport à l'autre formant entre elles un écart B et entraînées conjointement dans la direction du transport T des corps de volailles.

8. Dispositif selon la revendication 7, **caractérisé en ce que** l'écart A entre les deux éléments de guidage (14, 15) correspond au maximum à l'écart B entre les deux lames circulaires.

9. Dispositif selon l'une des revendications 1 à 8, **caractérisé en ce que** les dispositifs de séparation (11, 12) sont agencés pour pouvoir bouger vers le haut et vers le bas par rapport au plan de transport E.

10. Dispositif selon la revendication 9, **caractérisé en ce que** les dispositifs de séparation (11, 12) peuvent pivoter autour d'un pivot pour effectuer un mouvement vers le haut et le bas commandé par came.

11. Dispositif selon l'une des revendications 1 à 10, **caractérisé en ce que** l'élément d'écartement (17) est un levier d'écartement (27) fixe et pivotant autour d'un axe de pivotement P, qui est placé dans le sens du transport T des corps de volailles dans la zone d'entrée M des corps de volailles dans les dispositifs de séparation (11, 12).

12. Dispositif selon la revendication 11, **caractérisé en ce que** l'axe de pivotement P du levier d'écartement (27) se situe en dessous des éléments de guidage (14, 15), une extrémité libre (28) du levier d'écartement (27) s'élevant vers le haut en direction de la carcasse à partir du dispositif de guidage (13) dans un état non actionné, pendant que l'extrémité libre opposée (29) du levier d'écartement (27) est poussée contre une butée (31) au moyen d'un élément de ressort (30).

13. Dispositif selon la revendication 12, **caractérisé en ce que** l'extrémité libre (28) du levier d'écartement (27) dirigée vers le haut en direction de la carcasse, à savoir un doigt d'écartement, se situe entre les deux dispositifs de séparation (11, 12).

14. Dispositif selon l'une des revendications 1 à 13, **caractérisé en ce que** les deux éléments de séparation (11, 12) sont associés à un élément de protection en forme de plaque (33) qui fait saillie dans le sens du transport T des corps de volailles dans la zone d'entrée M des corps de volailles dans les dispositifs de séparation (11, 12) dans une zone située en dessous du dispositif de guidage (13) depuis les dispositifs de séparation (11, 12).

15. Dispositif selon l'une des revendications 1 à 14, **caractérisé en ce que** les deux dispositifs de séparation (11, 12) sont associés à un déflecteur (34, 35) qui recouvre au moins partiellement les arêtes de coupe des dispositifs de séparation (11, 12) dans le sens du transport T des corps de volailles dans la zone d'entrée M des corps de volailles dans les dispositifs de séparation (11, 12) en dessous des éléments de guidage (14, 15).

16. Dispositif selon l'une des revendications 1 à 15, **caractérisé en ce que** le dispositif de guidage (13) est associé à un élément conducteur (42) dans la zone de sortie N, l'élément conducteur (42) étant situé en dessous du dispositif de guidage (13) et réalisé de façon à être mobile.

17. Dispositif selon la revendication 16, **caractérisé en ce que** l'élément conducteur (42) se compose de deux éléments partiels (43, 44), chaque élément partiel (43, 44) pouvant pivoter autour d'un axe de pivotement horizontal W.

18. Procédé destiné à la séparation complète de la carcasse d'un filet de poitrine déjà partiellement séparé de la carcasse d'un corps de volaille éviscéré notamment avec un dispositif selon l'une des revendications 1 à 17 comportant les étapes :
- Guidage de la carcasse avec les filets de poitrine déjà partiellement séparés et pendant du sternum de la carcasse dans la zone d'un dispositif (10) de séparation complète des filets de poitrine du sternum,
- Insertion du sternum de la carcasse entre deux éléments de guidages (14, 15) situés côte à côte et espacés l'un de l'autre,
- Guidage de la carcasse dans la direction de deux dispositifs de séparation (11, 12) espacés l'un par rapport à l'autre,
- Insertion du sternum entre les dispositifs de séparation (11, 12) ; et
- Séparation complète des filets de poitrine au moyen des dispositifs de séparation (11, 12) faisant saillie vers le haut depuis les éléments de guidage (14, 15),
**caractérisé en ce que** les éléments de guidage (14, 15) pivotent en s'écartant latéralement avec ou après l'entrée du sternum entre les dispositifs de séparation (11, 12) et les filets de poitrine sont séparés du sternum pendant le procédé de séparation.

19. Procédé selon la revendication 18, **caractérisé en ce que** les éléments de guidage (14, 15) pivotent autour d'un axe de pivotement S et un élément d'écartement (17) est amené le long du contour du sternum pour écarter les filets de poitrine pendant le procédé de séparation.

20. Procédé selon la revendication 18 ou 19, **caractérisé en ce que** l'élément d'écartement (17) passe au travers de la carcasse.
